# EUROPEAN PATENT APPLICATION

(11) **EP 3 702 060 A1**
(43) Date of publication of application: **02.09.2020**
(21) Application number: 18906147.6
(22) Date of filing: 20.09.2018
(51) Int. Cl.: B21D 7/06, B29C 33/42

(54) **BENDING-FORMING DIE**

(30) Priority: 14.02.2018 JP 2018024012
(71) Applicant: Sanoh Industrial Co., Ltd., Tokyo 150-0013 (JP)
(72) Inventor: LAN, Guang Ping, Koga-shi Ibaraki 306-0041 (JP); NAKAZATO, Kazuhiko, Koga-shi Ibaraki 306-0041 (JP)
(74) Representative: Hoppe, Lars
(86) International application number: PCT/JP2018/034849
(87) International publication number: WO 2019/159413

(57) **Abstract**

An object of the present invention is to provide a bending die that has a simple configuration and is capable of bending a rod-shaped body in a three-dimensional XYZ direction quickly and reliably. The bending die includes XY-plane forming dies 10, 20 that are to be clamped in an X direction to bend the rod-shaped body in an XY plane, and Z-direction forming dies 30, 40 that are to be clamped in a Z direction to bend the rod-shaped body in the Z direction, wherein when both the XY-plane forming dies and the Z-direction forming dies are clamped, a cavity that forms the rod-shaped body bent in the three-dimensional XYZ direction is defined therebetween.

## Description

### [Technical Field]

The present invention relates to a bending die used for forming a rod-shaped body bent in a three-dimensional XYZ direction.

The term "rod-shaped body" used herein is intended to broadly refer to both solid and hollow rod-shaped articles.

### [Background Art]

For example, a tubular resin tube that is bent three-dimensionally as in an automobile part such as a hose is formed using a bending die. As a forming technique using such bending die, there exist techniques disclosed in, for example, PTL 1 and PTL 2.

The technique disclosed in PTL 1 is as follows.

A method for blow-forming a three-dimensionally bent product, the method including the steps of: pressing and bending a parison P descending under a die 5 into a bent shape in a front-rear direction of a die 3 of one of opening/closing split dies 1a by means of an upright wall 4 that slides on a PL surface 2 of the opening/closing split die 1a; pressing and bending a lateral direction of the parison P into a bent shape in a lateral direction of the die 3 of the opening/closing split die 1a by means of a core 4a that moves side by side in front of the upright wall 4; and closing the opening/closing split dies 1a, 1b to blow-form the parison P (claim 1 of PTL 1) .

An apparatus for blow-forming a three-dimensionally bent product that has the opening/closing split dies 1a, 1b, wherein the PL surface 2 of one of the opening/closing split dies 1a is provided with the upright wall 4 that slides, presses and bends the parison P into the bent shape in the front-rear direction of the die 3 of the opening/closing split die 1a, the parison P descending under the die 5, and the core 4a that pushes the parison into the die 3 is provided in front of the upright wall 4 (claim 4 of PTL 1).

The technique disclosed in PTL 2 is as follows.

A blow die used for blow-forming a bent, tubular blow-formed article, the blow die including: a lower die having a lower cavity corresponding to the lower side of a vertically divided cavity for forming the blow-formed article; a pair of cavity fences formed over a range for forming at least a bent portion of the blow-formed article, into a shape following a track of an edge on an upper surface of the lower die of the lower cavity, the cavity fences facing each other on the upper surface of the lower die, with the lower cavity therebetween; and fence advancing/retracting means that, when the lower die and an upper die paired therewith are clamped, retracts each of the cavity fences to a standby position that does not hinder the clamping outside the edge, and when pushing out the parison, moves each of the cavity fences from the standby position until the shape of each of the cavity fences at least matches the trac of the edge (claim 1 of PTL 2).

### [Citation List]

### [Patent Literature]

[PTL 1] Japanese Patent No. 3484421
[PTL 2] Japanese Utility Model Registration No. 2550307

### [Summary of Invention]

### [Technical Problem]

However, the technique disclosed in PTL 1 has a complicated configuration provided with the opening/closing split dies 1a, 1b, the upright wall 4 that slides and then presses and bends the parison
into the bent shape in the front-rear direction of the die 3 of the opening/closing split die 1a, and the core 4a that pushes the parison into the die 3 in front of the upright wall 4. In addition, when closing the opening/closing split dies 1a, 1b to form the parison, the upright wall 4 and the core 4a need to be retracted to a position that does not hinder the closing of the opening/closing split dies 1a, 1b, thereby lengthening the formation cycle and changing the position of the parison that is pressed when retracting the upright wall 4 and the core 4a; thus, when the opening/closing split dies 1a, 1b are closed, a burr may be generated by sandwiching the parison.

The technique disclosed in PTL 2, on the other hand, is not provided with the core 4a of PTL 1 that pushes the parison into the die 3, and therefore has a simple configuration. However, the parison is pushed into the lower cavity 22 by using a pressing force for extruding the parison P from a nozzle of the extruder 50. Therefore, the parison can be securely loaded along the bending of the lower cavity 22 only by adjusting the speed of extruding the parison or controlling the movement of the lower die. In the technique disclosed in PTL 2 as well, when the upper and lower dies are clamped, the pair of cavity fences 24, 26 need to be retracted to the standby position that does not hinder the clamping, thereby lengthening the formation cycle, changing the position of the parison when retracting the cavity fences 24, 26, and causing a burr, as with the technique disclosed in PTL 1.

The present invention was contrived in view of the problems faced by the prior art described above, and an object of the present invention is to provide a bending die that not only has a simple configuration but also is capable of bending a rod-shaped body in a three-dimensional XYZ direction quickly and reliably.

### [Solution to Problem]

In order to achieve the object described above, the present invention provides a bending die described in the following [1] to [4].
[1] A bending die used for forming a rod-shaped body bent in a three-dimensional XYZ direction, the bending die comprising: an XY-plane forming die that is to be clamped in an X direction to bend the rod-shaped body in an XY plane; and a Z-direction forming die that is to be clamped in a Z direction to bend the rod-shaped body in the Z direction, wherein when both the XY-plane forming die and the Z-direction forming die are clamped, a cavity that forms the rod-shaped body bent in the three-dimensional XYZ direction is defined therebetween.
[2] The bending die according to [1] above, wherein the XY-plane forming die is a pair of forming dies that are to be clamped in the X direction, and forming surfaces for bending the rod-shaped body in an XY direction are formed on respective plate surfaces of the forming dies that face each other.
[3] The bending die according to [2] above, wherein, when the pair of XY-plane forming dies is clamped, the pair of XY-plane forming dies defines a cavity between the forming surfaces facing each other, a width of the cavity being approximately equivalent to an outer diameter of the rod-shaped body to be bent.
[4] The bending die according to any of [1] to [3] above, wherein the Z-direction forming die is a pair of forming dies to be clamped in the Z direction; forming recess portions are formed at facing tip surfaces of the pair of forming dies; and the forming recess portions define a cavity for forming the rod-shaped body bent in the three-dimensional XYZ direction between the forming recess portions when the pair of forming dies are clamped.

### [Advantageous Effects of Invention]

This bending die according to the present invention comprises the XY-plane forming die that is clamped in the X direction to bend the rod-shaped body in the XY plane, and the Z-direction forming die that is clamped in the Z direction to bend the rod-shaped body in the Z direction, and such a configuration is not only simple but also easily operable and controllable. Also, when these forming dies are clamped, the cavity for forming the rod-shaped body bent in the three-dimensional XYZ direction is defined between these forming dies. Therefore, since a forming die that is retracted at the time of clamping does not exist, the forming cycle can be shortened, and the change in the position of the rod-shaped body to be processed, which is caused by retracting a forming die, does not occur; thus, the rod-shaped body that has no burr and is bent in the three-dimensional XYZ direction can be formed easily and reliably.

### [Brief Description of Drawings]

[Fig. 1]

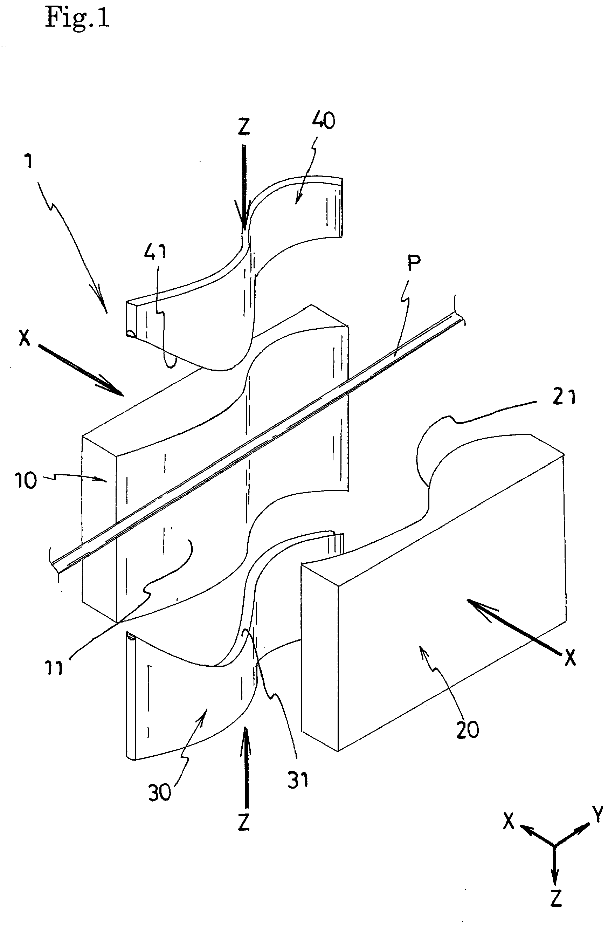

   Fig. 1 is a schematic perspective view showing an embodiment of a bending die according to the present invention.
[Fig. 2]

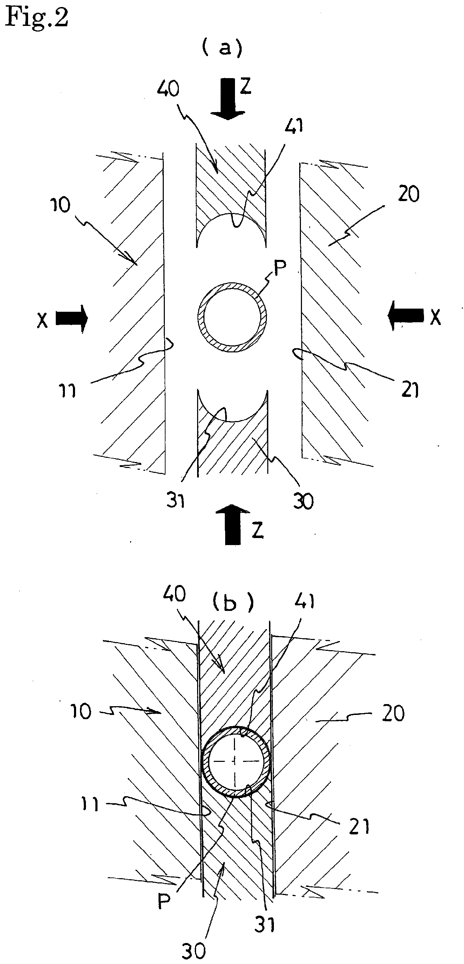

   Fig. 2 is a schematic cross-sectional view showing principal portions of the bending die shown in Fig. 1, where (a) shows a state prior to clamping, and (b) a state after clamping.
[Fig. 3]

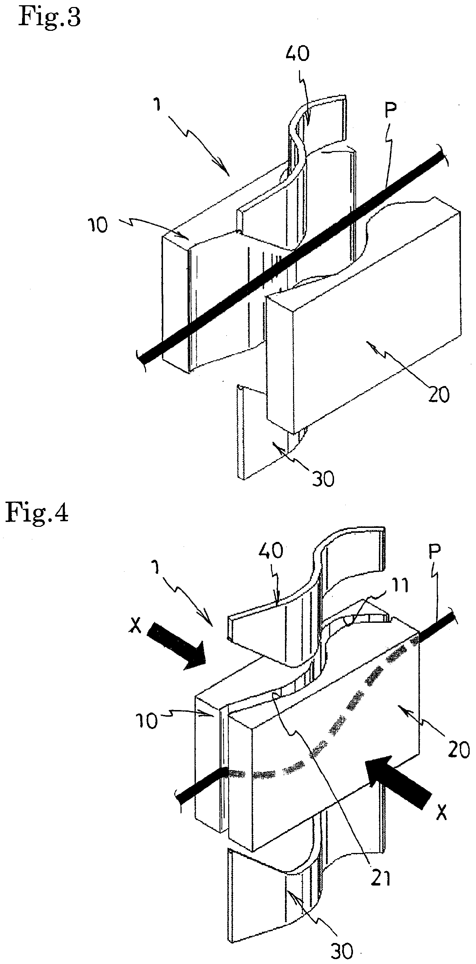

   Fig. 3 is a schematic perspective view showing an example of an operating procedure of the bending die shown in Fig. 1, the perspective view showing a step of setting a rod-shaped body.
[Fig. 4]
   Fig. 4 is a schematic perspective view showing an example of the operating procedure of the bending die shown in Fig. 1, the perspective view showing a step of bending the rod-shaped body in an XY direction.
[Fig. 5]

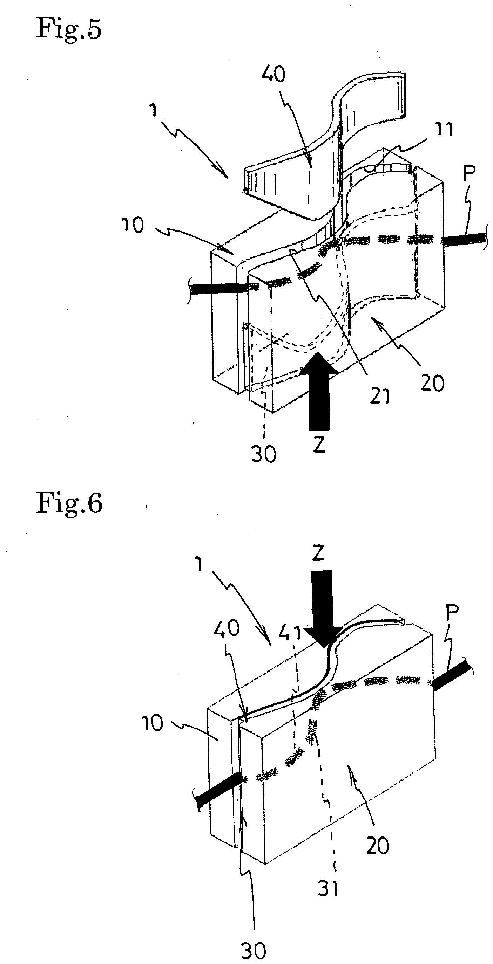

   Fig. 5 is a schematic perspective view showing an example of the operating procedure of the bending die shown in Fig. 1, the perspective view showing a step of setting a lower Z-direction forming die.
[Fig. 6]
   Fig. 6 is a schematic perspective view showing an example of the operating procedure of the bending die shown in Fig. 1, the perspective view showing a step of bending the rod-shaped body in a Z direction.
[Fig. 7]

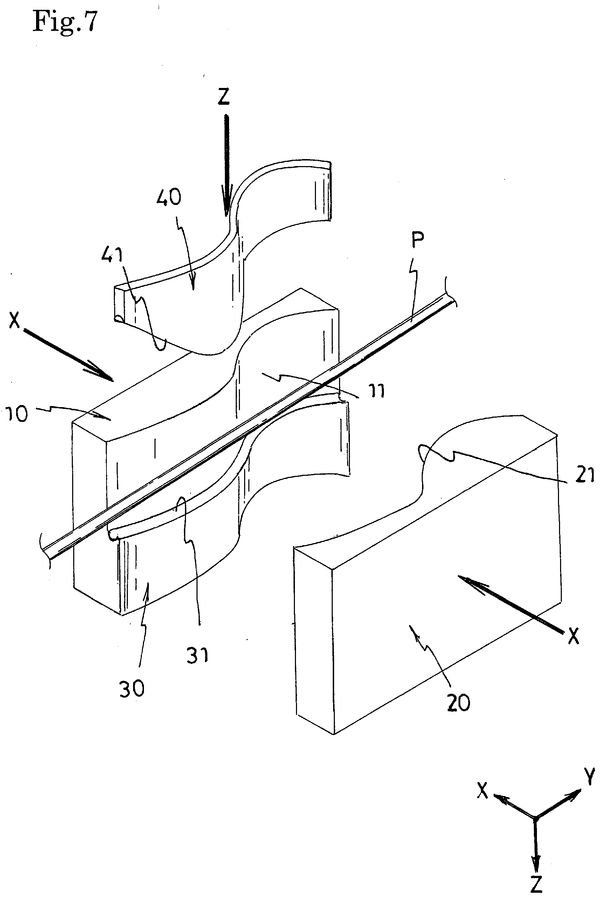

   Fig. 7 is a schematic perspective view showing another embodiment of the bending die according to the present invention.
[Fig. 8]

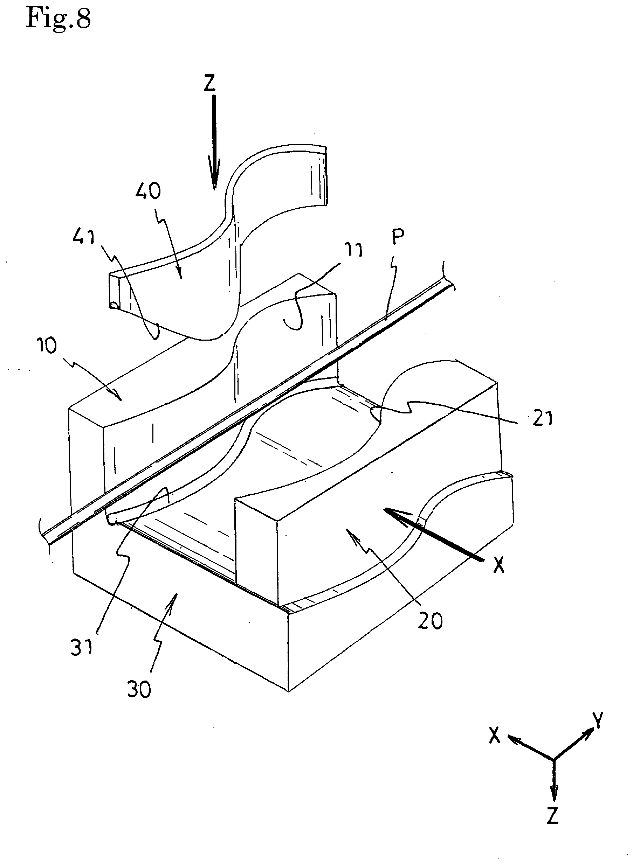

   Fig. 8 is a schematic perspective view showing yet another embodiment of the bending die according to the present invention.
[Fig. 9]

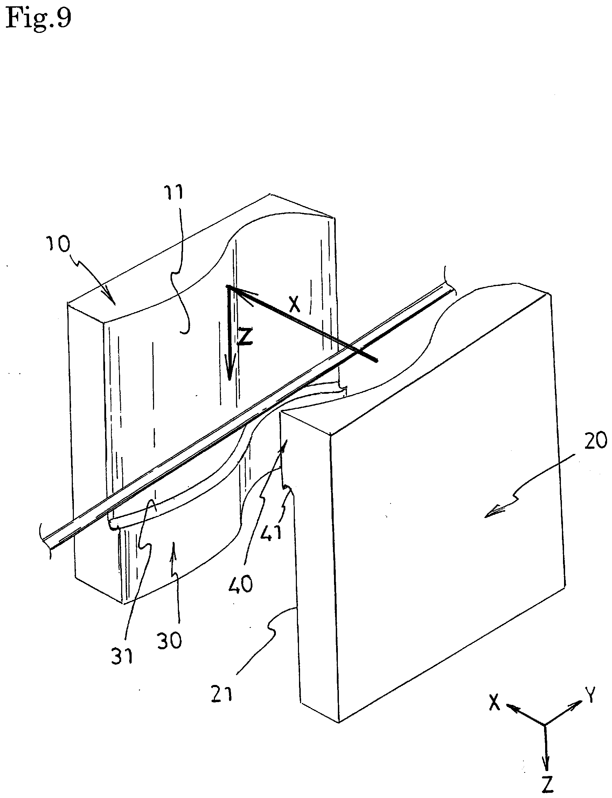

   Fig. 9 is a schematic perspective view showing yet another embodiment of the bending die according to the present invention.

### [Description of Embodiments]

Embodiments of the bending die according to the present invention are described hereinafter with reference to the drawings.

Fig. 1 is a perspective view showing an embodiment of the bending die according to the present invention. This bending die 1 is composed of XY-plane forming dies 10, 20 that are to be clamped in an X direction to bend a rod-shaped body P in an XY plane, and Z-direction forming dies 30, 40 that are to be clamped in a Z direction to bend the rod-shaped body P in a Z direction.

Examples of the "rod-shaped body P" include a solid steel bar, a stainless steel bar, a resin bar, a hollow steel pipe, a stainless steel pipe, a resin pipe, and the like.

The XY-plane forming dies 10, 20 are a pair of forming dies that is to be clamped in the X direction by an actuator which is not shown, and forming surfaces 11, 21 for bending the rod-shaped body P in an XY direction are formed on respective opposing plate surfaces of the forming dies. The forming surfaces 11, 21 are formed by being bent in the XY direction into the shape of the final rod-shaped body P to be bent in the three-dimensional XYZ direction, i.e., the product shape projected on the XY plane, and also formed flat without undulations in the Z direction.

When the pair of XY-plane forming dies 10, 20 is clamped, the pair of XY-plane forming dies 10, 20 defines a cavity between the opposing forming surfaces 11, 21, the width of the cavity being approximately equivalent to an outer diameter of the rod-shaped body P to be bent, and bends the rod-shaped body P on the XY plane in the XY direction.

The pair of XY-plane forming dies 10, 20 may be configured so as to be able to advance and retract in the X direction, or either one of the dies may be configured as a stationary die and the other die as a moving die that advances and retracts in the X direction with respect to the stationary die.

The Z-direction forming dies 30, 40 are a pair of forming dies that is to be clamped in the Z direction by an actuator which is not shown. The pair of Z-direction forming dies 30, 40 is formed into a plate body that has such thickness and shape as to be inserted, in the Z direction, into the cavity that is defined between the opposing forming surfaces 11, 21 by the pair of XY-plane forming dies 10, 20 when the XY-plane forming dies 10, 20 are clamped, i.e., a plate body that has a thickness approximately equivalent to the outer diameter of the rod-shaped body P and has a plate surface thereof being bent in the XY direction into the product shape of the rod-shaped body P projected on the XY plane, wherein opposing ends of the plate body are bent in the Z direction so as to follow the product shape of the rod-shaped body P.

As shown in Fig. 2, a forming recess portion 31 is formed at a tip surface of the Z-direction forming die 30 and a forming recess portion 41 is formed at a tip surface of the Z-direction forming die 40, where a tip surface of the Z-direction forming die 30 faces the tip surface of the Z-direction forming die 40. The forming recess portions 31, 41 define, between them, a cavity for forming the rod-shaped body P bent in the three-dimensional XYZ direction when the both are clamped

The pair of Z-direction forming dies 30, 40 may be configured so as to be able to advance and retract in the Z direction, or either one of the dies may be configured as a stationary die and the other die as a moving die that advances and retracts in the Z direction with respect to the stationary die. However, when configuring either one of the forming dies as a stationary die, the forming die configured as a stationary die is positioned within the cavity that is defined between the opposing forming surfaces 11, 21 of the pair of XY-plane forming dies 10, 20 when the pair of XY-plane forming dies 10, 20 are clamped.

The bending die 1 according to the present invention having the configuration described above is operated as follows, to bend the rod-shaped body P in the three-dimensional XYZ direction.

First, as shown in Fig. 3, the rod-shaped body P to be processed is set in the bending die 1 according to the present invention. Subsequently, as shown in Fig. 4, the XY-plane forming dies 10, 20 are clamped in the X direction by the unshown actuator, and the rod-shaped body P is sandwiched between the forming surfaces 11, 21 of the XY-plane forming dies 10, 20, to bend the rod-shaped body P in the XY direction.

Subsequently, as shown in Fig. 5, the lower forming die 30 of the pair of Z-direction forming dies 30, 40 is clamped in the Z direction by the unshown actuator, and then the lower Z-direction forming die 30 is disposed inside the cavity that is defined between the opposing forming surfaces 11, 21 of the pair of XY-plane forming dies 10, 20 clamed as described above. This operation is not required in a case where the lower Z-direction forming die 30 is configured as a stationary die and this lower forming die 30 as a stationary die is positioned within the cavity that is defined between the opposing forming surfaces 11, 21 when the pair of XY-plane forming dies 10, 20 are clamped.

Thereafter, as shown in Fig. 6, the upper Z-direction forming die 40 is clamped in the Z direction by the actuator (not shown), and then the rod-shaped body P is sandwiched by the forming recess portions 31, 41 formed at the respective opposing tip surfaces of the pair of Z-direction forming dies 30, 40, to bend the rod-shaped body P in the Z direction to obtain the final product shape. In so doing, in a case where the rod-shaped body P is a hollow resin pipe, a pressurized gas may be introduced into the rod-shaped body P if necessary, from the perspective of preventing buckling during the formation of the rod-shaped body P. In addition, the operations shown in Figs. 4 to 6 may be executed substantially simultaneously, to bend the rod-shaped body P in all the directions simultaneously by means of the respective forming dies 10, 20, 30, 40.

The foregoing bending die 1 according to the present invention is configured by the XY-plane forming dies 10, 20 that are to be clamped in the X direction to bend the rod-shaped body P on the XY plane, and the Z-direction forming dies 30, 40 that are to be clamped in the Z direction to bend the rod-shaped body P in the Z direction, and such a configuration is not only simple but also easily operable and controllable. Since the forming dies 10, 20, 30, 40 are configured such that the cavity for forming the rod-shaped body P bent in the three-dimensional XYZ direction is defined therebetween when these forming dies are clamped, none of these forming dies needs to be retracted at the time of clamping. Therefore, the forming cycle can be reduced. Furthermore, the change in the position of the rod-shaped body P to be processed, which is caused by retracting a forming die, does not occur; the rod-shaped body P that has no burr and is bent in the three-dimensional XYZ direction can be formed easily and reliably.

The bending die 1 according to the present invention may have the following modified embodiments.

Fig. 7 shows a configuration in which the forming die is composed of three members.

This bending die 1 has a configuration in which the lower forming die 30 out of the Z-direction forming dies 30, 40 that are to be clamped in the Z direction of the bending die 1 of the embodiment shown in Fig. 1 to bend the rod-shaped body P in the Z direction, is attached integrally to the plate surface of the forming die 10 of the XY-plane forming dies 10, 20 that are to be clamped in the X direction to bend the rod-shaped body P on the XY plane, and the bending die 1 is composed virtually of three members. For this reason, the configuration of the bending die 1 is simpler.

Operations and control of the bending die 1 are simpler and only include clamping of the XY-plane forming dies 10, 20 in the X direction and clamping of the upper Z-direction forming die 40 in the Z direction, as shown by the arrows in Fig. 7.

Fig. 8 shows a modification in which the forming die is configured by three members.

This bending die 1 has a configuration in which the lower forming die 30 of the Z-direction forming dies 30, 40 of the bending die 1 according to the embodiment shown in Fig. 1 is configured as a base-type object extending in the X direction, and this base-type lower Z-direction forming die 30 is attached integrally to the plate surface of the forming die 10 of the XY-plane forming dies 10, 20, and a lower end surface of the other forming die 20 of the XY-plane forming dies 10, 20 is bent into a shape that follows an upper end surface of the base-type lower Z-direction forming die 30, and the XY-plane forming die 20 having the lower end surface bent as described above is caused to slide on the base-type lower Z-direction forming die 30, thereby clamping the forming die 20 in the X direction.

The bending die 1 having such configuration not only achieves the same effects as those of the forming die shown in Fig. 7 but also causes the base-type lower Z-direction forming die 30 to function as a seat for supporting the rod-shaped body P to be processed; the forming die hardly bites into the rod-shaped body P.

Fig. 9 shows a configuration in which the forming die is composed of two members.

This bending die 1 has a configuration in which the lower forming die 30 of the Z-direction forming dies 30, 40 of the bending die 1 according to the embodiment shown in Fig. 1 is attached integrally to a lower plate surface of the forming die 10 of the XY-plane forming dies 10, 20, and the upper forming die 40 of the Z-direction forming dies 30, 40 is attached integrally to an upper plate surface of the other forming die 20 of the XY-plane forming dies 10, 20, and the bending die 1 is composed virtually of two members. For this reason, the configuration of this bending die 1 is simpler.

Operations and control of the bending die 1 are simpler and only include clamping the XY-plane forming die 10 in the X direction, the XY-plane forming die 10 being integrated with the upper Z-direction forming die 40, and then moving this XY-plane forming die 10 in the Z direction, as shown by the arrows in Fig. 9.

Various embodiments of the forming die according to the present invention were described above. However, needless to say, the present invention is not limited to these embodiments and can be implemented in various other modes without departing from the gist of the present invention.

### [Industrial Applicability]

The bending die according to the present invention has a simple configuration and is capable of bending a rod-shaped body in a three-dimensional XYZ direction quickly and reliably. Thus, the present invention can be widely used for bending a variety of resin or metal pipes and hoses that are used particularly as home appliances, automobile parts, and the like.

### [Reference Signs List]

- 1: Bending die
- 10, 20: XY-plane forming die
- 11, 21: Forming surface
- 30, 40: Z-direction forming die
- 31, 41: Forming recess portion
- P: Rod-shaped body

## Claims

1. A bending die used for forming a rod-shaped body bent in a three-dimensional XYZ direction, the bending die comprising: an XY-plane forming die that is clamped in an X direction to bend the rod-shaped body in an XY plane; and a Z-direction forming die that is clamped in a Z direction to bend the rod-shaped body in the Z direction, wherein, when both the XY-plane forming die and the Z-direction forming die are clamped, a cavity that forms the rod-shaped body bent in the three-dimensional XYZ direction is defined therebetween.

2. The bending die according to claim 1, wherein the XY-plane forming die is a pair of forming dies clamped in the X direction, and forming surfaces for bending the rod-shaped body in an XY direction are formed on respective plate surfaces of the forming dies that face each other.

3. The bending die according to claim 2, wherein, when the pair of XY-plane forming dies is clamped, the pair of XY-plane forming dies defines a cavity between the forming surfaces facing each other, a width of the cavity being approximately equivalent to an outer diameter of the rod-shaped body to be bent.

4. The bending die according to any of claims 1 to 3, wherein the Z-direction forming die is a pair of forming dies clamped in the Z direction; forming recess portions are formed at facing tip surfaces of the pair of forming dies; and the forming recess portions define a cavity for forming the rod-shaped body bent in the three-dimensional XYZ direction between the forming recess portions when the pair of forming dies are clamped.
